# EUROPEAN PATENT SPECIFICATION

(11) **EP 4 411 109 B1**
(45) Date of publication and mention of the grant of the patent: **19.11.2025**
(21) Application number: 24155028.4
(22) Date of filing: 31.01.2024
(51) Int. Cl.: F01D 5/28, F01D 9/02, F01D 25/24

(54) **METAL PLATED ADDITIVELY MANUFACTURED PLASTIC HOUSING**
METALLPLATTIERTES GENERATIV GEFERTIGTES KUNSTSTOFFGEHÄUSE
BOÎTIER EN PLASTIQUE FABRIQUÉ DE MANIÈRE ADDITIVE ET PLAQUÉ DE MÉTAL

(30) Priority: 01.02.2023 US 202318104568
(43) Date of publication of application: 07.08.2024
(73) Proprietor: Hamilton Sundstrand Corporation, Charlotte, NC 28217-4578 (US)
(72) Inventor: MERRITT, Brent J., Southwick, 01077 (US); KILCHYK, Viktor, Lancaster, NY 06110 (US)
(74) Representative: Dehns

(56) References cited:
- CA-A1- 2 917 967
- CN-B- 102 472 115
- US-A1- 2016 169 012

## Description

### BACKGROUND

The present invention relates generally to aviation components and, more particularly, to metal-plated plastic housings.

Metal-plated plastic aviation components have been developed as a lightweight, high-strength, alternative to metal components. Metal-plated plastic components include a plastic or plastic substrate coated with a metal plating on an outer surface. The metal plating increases the strength and abrasion resistance of the component. Metal-plated plastic components have been particularly attractive for use in gas turbine engine applications, where they can provide overall weight reduction of the engine to improve engine efficiency and provide fuel cost savings.

Limitations in use of metal-plated plastic components include poor adhesion between the metal plating and the plastic substrate, which reduces long-term component durability. Various methods of manufacture and mechanical locking features have been developed to improve an interfacial bond strength between the metal plating the plastic at variable temperatures, as separation of the metal plating can occur.

The following prior art discloses a housing for turbomachines according to the preamble of claim 1: CN 102 472 115 B. The further prior art CA 2 917 967 A1 discloses a compressor component for a gas turbine engine, the component comprising a polymeric substrate and one metallic plating layer deposited on one exposed surface of the polymeric substrate.

### SUMMARY

In a first aspect of the invention, a housing for a turbomachine is defined, according to claim 1.

In a second aspect the method of forming the housing for a turbomachine is defined, according to claim 10.

The present summary is provided only by way of example, and not limitation. Other aspects of the present invention will be appreciated in view of the entirety of the present disclosure, including the entire text, claims and accompanying figures.

### BRIEF DESCRIPTION OF THE DRAWINGS

FIG. 1 is a simplified cross-sectional view of a portion of a metal-plated component.
FIG. 2 is a simplified cross-sectional view of a portion of another embodiment of a metal-plated component.
FIG. 3 is a flowchart of a method for forming a metal-plated component.
FIG. 4 is a cross-sectional view of a turbomachine.
FIG. 5A is a perspective view of a first side of a compressor outlet housing of the turbomachine.
FIG. 5B is a perspective view of a second side of the compressor outlet housing of the turbomachine.
FIG. 6 is a cross-sectional view of the compressor outlet housing taken along the section line 3-3 of FIG. 2A.
FIG. 7 is a cross-sectional view of the compressor outlet housing in the turbomachine.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

The present invention is directed to metal-plated additively manufactured plastic aviation housing components with controlled thermal expansion behavior to reduce component damage caused by operation in environments of varying temperature or temperature gradients.

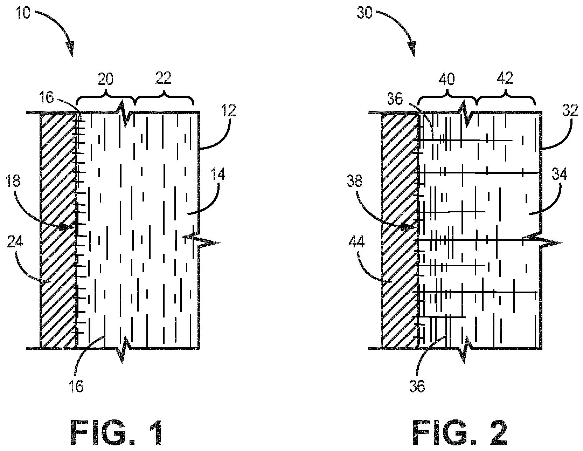

FIG. 1 is a simplified cross-sectional view of a portion of a metal-plated plastic component. FIG. 1 shows component 10, substrate 12, matrix 14, fibers 16, outer surface 18, inner region 20, outer region 22, and metal plating 24. Component 10 can be a housing component of a turbomachine. Substrate 12 has outer surface 18, inner region 20, and outer region 22. Outer region 22 is adjacent to outer surface 18. Inner region 20 is separated from outer surface 18 by outer region 22. Substrate 12 includes matrix 14 and fibers 16. Fibers 16 are embedded in matrix 14. Metal plating 24 is disposed on outer surface 18 of substrate 12.

Substrate 12 includes matrix 14 and fibers 16. Matrix 14 is a plastic or polymer material. Matrix 14 can be a thermoplastic. Matrix 14 can include but is not limited to acrylonitrile butadiene styrene (ABS), polyetherimide (PEI), thermoplastic polyimide, polyether ether ketone (PEEK), polyether ketone (PEKK), polysulfone, polyamide, polyphenylene sulfide, polyester, polyimide, and combinations thereof. Matrix 14 can define a shape of substate 12. Matrix 14 can be formed of a plurality of materials with individual materials selectively located in substrate 12 to provide desired material properties in different regions of component 10. In some embodiments, substrate 12 can include one or more voids or open sections or structures, such as a hollow core or openings formed between internal support structures.

Fibers 16 are embedded in matrix 14. Fibers 16 are selected and arranged to control a bulk coefficient of thermal expansion (CTE) of substrate 12. Fibers 16 are selected and arranged in substrate 12 to reduce a CTE mismatch between substrate 12 and metal plating 24. Substrate 12 with fibers 16 can be designed to have a bulk CTE substantially matching a CTE of metal plating 24 to prevent separation of metal plating 24 from outer surface 18 during operation of component 10 in varying temperatures. Fibers 16 can be selected and arranged to meet additional functional requirements of component 10 including stress reduction, deflection management, and energy containment as described further herein.

Matrix 14 can be formed of a material having a CTE greater than the CTE of metal plating 24. Fibers 16 can be formed of material having a lower CTE than the CTE of matrix 14 to lower the bulk CTE of substrate 12. Fibers 16 constrain thermal expansion of substrate 12. Fibers 16 can include but are not limited to carbon, metal, para-aramid (e.g., Kevlar^{®} and Twaron^{®}), glass, and combinations thereof. In some embodiments, fibers 16 can be formed of the same material as metal plating 24. In some embodiments, subsets of fibers 16 can be formed of different materials. Regions of substrate 12 can include fibers 16 formed of the same material or different materials. The combinations of materials forming matrix 14 and fibers 16 can vary throughout a component to provide desired material properties.

Fibers 16 can be continuous fibers, discontinuous fibers, or combinations thereof. Fibers 16 can have a filament diameter and length selected to minimize cracking of substrate 12 caused by separation at fiber-matrix interfaces. A concentration and arrangement of fibers 16 can be selected to provide substrate 12 with a bulk CTE substantially matching the CTE of metal plating 24. As shown in FIG. 1, fibers 16 can be substantially uniformly distributed throughout matrix 14 to provide an entirety of substrate 12 with a bulk CTE substantially matching the CTE of metal plating 24. As discussed further herein, in some embodiments, fiber placement can be tailored to control a bulk CTE of one or more regions of substrate 12.

Fibers 16 can be disposed to extend parallel to outer surface 18 and metal plating 24 and/or perpendicular or otherwise angled relative to metal plating 24. Fibers 16 extending perpendicular to otherwise angled relative to metal plating 24 can extend through outer surface 18. Fibers 16 protruding through outer surface 18 can improve a bond between metal plating 24 and substrate 12. In some embodiments, a subset of fibers 16 can be disposed on or at outer surface 18. For example, fibers 16 can form a portion of outer surface 18 with individual fibers 16 separated by matrix 14. Fibers 16 disposed at outer surface 18 or protruding through outer surface 18 can be formed of a material capable of forming a high-strength bond with metal plating 24. Fibers 16 disposed at outer surface 18 or protruding through outer surface 18 can thereby improve a bond between metal plating 24 and substrate 12. For example, fibers 16 disposed at outer surface 18 or protruding through outer surface 18 can be formed of metal. In some embodiments, fibers 16 and metal plating 24 can be the same material. In some embodiments, a subset of fibers 16 formed of metal can be provided to improve bonding of metal plating 24, while bulk CTE of substrate 12 can be controlled primarily by a subset of fibers 16 formed of another material (e.g., carbon, para-aramid, or glass).

Selection of fiber 16 material, geometry, orientation relative to metal plating 24 or outer surface 18, and concentration can be made to provide substate 12 with an expansion rate in outer region 22 in a plane parallel to metal plating 24 not exceeding the expansion rate of metal plating 24, while also improving a bond between substrate 12 and metal plating 24. While it is particularly important to control CTE mismatch between substrate 12 and metal plating 24 at the interface and an adjacent region to prevent separation of metal plating 24, it may not be necessary that all regions of substrate 12 have the same CTE as discussed further herein. In some embodiments, the composition of both fibers 16 and matrix 14 can vary from one region to another. The combination of materials can be selected to provide a desired bulk CTE and other material properties optimized for the operation of component 10. Metal plating 24 is disposed on outer surface 18. Metal plating can include but is not limited to chromium-nickel alloys or alloys containing at least one of nickel, cobalt, copper, iron, palladium, chromium, and cadmium. Metal plating 24 can be selected based on the operational environment of component 10 and performance requirements of component 10, including but not limited to operating temperatures, vibrational impacts, environmental contaminants, impact requirements, etc. Metal plating can have a thickness selected to achieve a desired strength of component 10 while minimizing the amount of weight metal plating 24 adds to substrate 12. Metal plating can have a thickness, for example, in a range of about 0.001 inches (0.0254 mm) to about 0.050 inches (1.27 mm). It may be desirable to provide metal plating 24 with a thickness outside of these ranges for some applications. Metal plating can be disposed directly on outer surface 18 of substrate 12. Metal plating 24 can cover all or portions of outer surface 18.

FIG. 2 is a simplified cross-sectional view of a portion of another embodiment of a metal-plated plastic component. FIG. 2 shows component 30, substrate 32, matrix 34, fibers 36, outer surface 38, inner region 40, outer region 42, and metal plating 44. Component 30 can be substantially similar to component 10 with the exception of the placement of fibers 36. Matrix 34 and metal plating 44 can be substantially the same as matrix 14 and metal plating 24 of component 10 shown in FIG. 1 and described with respect thereto. As described further herein, portions of matrix 34 can be provided with or without fibers 36. For example, some regions of substrate 32 can be formed of matrix 34 without fibers 36.

Fibers 36 are embedded in matrix 34. Fibers 36 are selected and arranged to control a bulk coefficient of thermal expansion (CTE) of substrate 32, particularly in outer region 42 and outer surface 38. Fibers 36 are selected and arranged in substrate 32 to reduce a CTE mismatch between substrate 32 and metal plating 44. Substrate 32 with fibers 36 can be designed to have a bulk CTE, particularly in outer region 42 and at outer surface 38, substantially matching a CTE of metal plating 44 to prevent separation of metal plating 44 from outer surface 38 during operation of component 30 in varying temperatures. As further described herein, fibers 36 can be selected and arranged to meet additional functional requirements of component 30 including stress reduction, deflection management, and energy containment as described further herein.

Fibers 36 can be arranged in a concentration gradient extending from inner region 40 to outer surface 38 with inner region 40 having a lower concentration of fibers 36 than outer region 42. Inner region 40 can be defined as a region internal to component 30 and/or separated from outer surface 38. Outer region 42 is disposed between inner region 40 and outer surface 38 and extending to outer surface 38. In some embodiments, all or a portion of inner region 40 can be free of fibers 36. The arrangement of fibers 36 in this manner (i.e., concentration gradient) can produce a variation in CTE of substrate 12 from inner region 40 through outer region 42, however, the variation in CTE can be tailored to minimize an impact at outer surface 38 or the bond between metal plating 44 and substrate 32.

Fibers 36 can include but are not limited to carbon, metal, para-aramid (e.g., Kevlar^{®} and Twaron^{®}), glass, and combinations thereof. In some embodiments, fibers 36 can be formed of the same material as metal plating 44. In some embodiments, subsets of fibers 36 can be formed of different materials. Regions of substrate 32 can include fibers 36 formed of the same material or different materials. The combinations of materials forming matrix 14 and fiber 16 can vary throughout a component to provide desired material properties.

Fibers 36 can be continuous fibers, discontinuous fibers, or combinations thereof. Fibers 36 can have a filament diameter and length selected to minimize cracking of substrate 32 caused by separation at fiber-matrix interfaces. A concentration and arrangement of fibers 36 across inner region 40 and/or outer region 42 can be selected to provide substrate 32 with a bulk CTE at and adjacent to outer surface 38 substantially matching the CTE of metal plating 44. As shown in FIG. 2, fibers 36 can be provided in greatest concentration adjacent to outer surface 38.

As described with respect to FIG. 1, fibers 36 can be disposed to extend parallel and/or perpendicular or otherwise angled relative to outer surface 38 and metal plating 44. Fibers 36 extending perpendicular to otherwise angled relative to metal plating 44 can extend through outer surface 38. Fibers 36 protruding through outer surface 38 can improve a bond between metal plating 44 and substrate 32. In some embodiments, fibers 36 can be disposed on or at outer surface 38. For example, fibers 36 can form a portion of outer surface 38 with individual fibers 36 separated by matrix 34. Fibers 36 disposed at outer surface 38 or protruding through outer surface 38 can be formed of a material capable of forming a high-strength bond with metal plating 44. Fibers 36 disposed at outer surface 38 or protruding through outer surface 38 can thereby improve a bond between metal plating 44 and substrate 32. For example, fibers 36 disposed at outer surface 38 or protruding through outer surface 38 can be formed of metal. In some embodiments, fibers 36 and metal plating 44 can be the same material. A subset of fibers 36 formed of metal can be provided to improve bonding of metal plating 44, while bulk CTE of substrate 32 can be controlled primarily by a subset of fibers 36 formed of another material (e.g., carbon, para-aramid, or glass).

Selection of fiber 36 material, geometry, orientation relative to metal plating 44 or outer surface 38, and concentration can be made to provide substate 32 with an expansion rate in outer region 42 in a plane parallel to metal plating 44 not exceeding the expansion rate of metal plating 44, while also improving a bond between substrate 32 and metal plating 44.

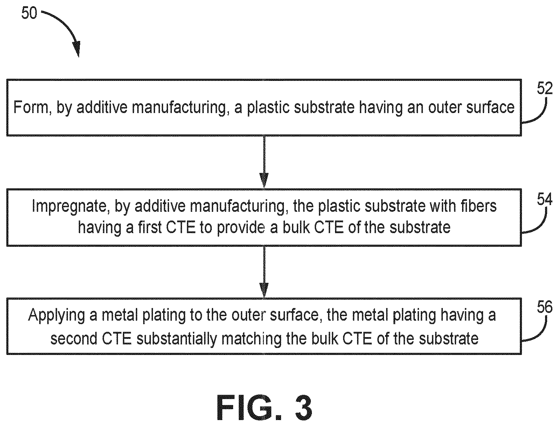

FIG. 3 is a flowchart of a method forming a metal-plated component according to the present disclosure. FIG. 3 shows method 50. Step 52 includes forming, by an additive manufacturing process, a plastic substrate (e.g., substrate 12 or 32) having an outer surface. The substrate can be formed by 3D plastic printing by depositing a matrix material, such as matrix materials 14 and 34 shown in FIGS. 1 and 2 and described with respect thereto.

Step 54 includes impregnating, by the additive manufacturing process, the substrate with fibers. Fibers can be fibers 16 and 36 shown in FIGS. 1 and 2 and described with respect thereto. As previously described, the fibers can be selected and arranged to provide desired material properties. Fibers can be co-extruded with the matrix material to form the substrate with fibers embedded in the matrix. The addition of fibers to the matrix material produces a substrate with a bulk CTE less than a CTE of the matrix material.

In some embodiments, fibers can be arranged in concentration and/or material gradients as previously described. Fiber arrangement can be controlled by the 3D printing process. In some embodiments, a dual nozzle can be used to extrude materials of different fiber compositions and/or fiber concentrations and selectively print the different material in different regions of the substrate. For example, step 54 can include selectively printing the fibers in a concentration gradient extending from an inner region of the plastic substrate to the outer surface of the plastic substrate, such that the concentration of fibers increases from the inner region toward the outer surface of the plastic substrate. In other embodiments, step 54 can include selectively printing the fibers in a region adjacent to the outer surface of the plastic substrate and/or at an angle relative to the outer surface and/or such that fibers protrude through the outer surface of the plastic substrate to improve bonding with a metal plating applied on the outer surface. In some embodiments, step 54 can include selectively printing the plastic substrate without the fibers (e.g., matrix material only) in an inner region of the plastic substrate.

Step 56 includes applying a metal plating to the outer surface of the substrate. Metal plating can be metal plating 24 and 44 shown in FIGS. 1 and 2 and described with respect thereto. The metal plating can be selectively applied to one or more locations on the outer surface (e.g., locations susceptible to damage by abrasion, etc.). The metal plating has a CTE substantially matching the bulk CTE of the substrate or bulk CTE of the substrate in a region adjacent to the outer surface of the substrate in the location metal plating is to be applied. The metal plating can be applied, for example by electroless plating. In some examples, a printer with a dual nozzle can be used to selectively print a catalyst material layer on all or portions of an outer surface of the substrate. For example, one nozzle can extrude the substrate material (matrix and fiber) and one nozzle can extrude the matrix material loaded with a catalyst. The metal plating can then be formed on the outer surface loaded with the catalyst through a process of electroless plating.

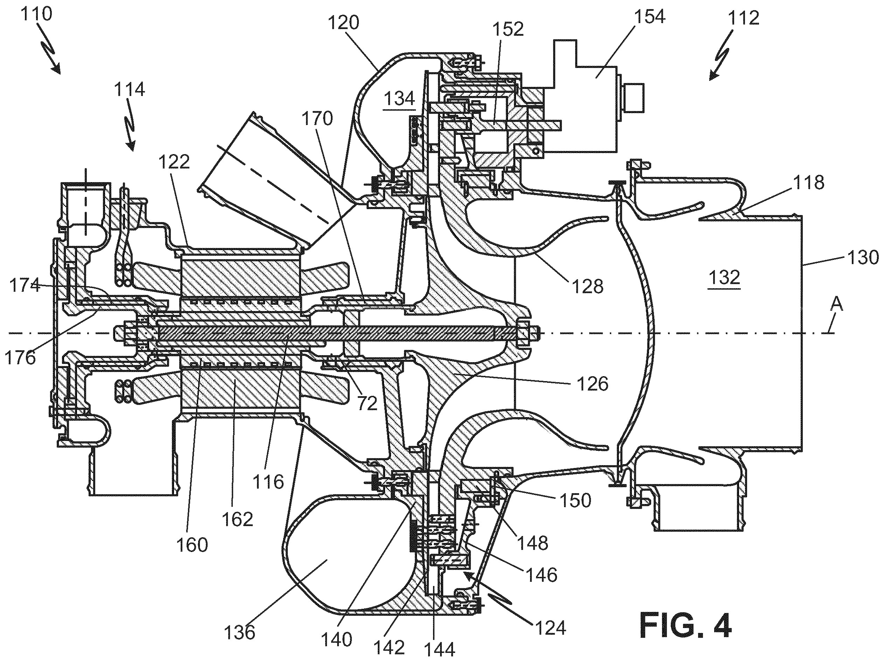

FIG. 4 is a cross-sectional view of turbomachine 110. Turbomachine 110 can be a cabin air compressor, and includes compressor section 112, motor section 114, tie rod 116, compressor inlet housing 118, compressor outlet housing 120, motor housing 122, variable diffuser 124, rotor 126, and rotor shroud 128. Compressor inlet housing 118 includes inlet 130 and inlet duct 132. Compressor outlet housing 120 includes outlet duct 134 and outlet 136. Variable diffuser 116 includes backing plate 140, inboard plate 142, diffuser vanes 144, drive ring 146, drive ring bearing 148, backup ring 150, pinion 152, and variable diffuser actuator 154. Motor section 114 includes motor rotor 160 and motor stator 162. Turbomachine 110 further includes first journal bearing 170, first rotating shaft 172, second journal bearing 174, and second rotating shaft 176. FIG. 4 also shows axis A.

Turbomachine 110 includes compressor section 112 and motor section 114 mounted on tie rod 116. Tie rod 116 is configured to rotate about axis A. Compressor section 112 includes compressor inlet housing 118 and compressor outlet housing 120 that are connected to one another. Motor section 114 includes motor housing 122, which is connected to compressor outlet housing 120. Variable diffuser 124 is positioned between compressor inlet housing 118 and compressor outlet housing 120. Rotor 126 is positioned between compressor inlet housing 118 and compressor outlet housing 120. Rotor 126 is mounted on tie rod 116, which rotatably connects rotor 126 and motor section 114. Rotor shroud 128 is positioned radially outward from and partially surrounds compressor rotor 126.

Compressor inlet housing 118 includes inlet 130 and inlet duct 132. Inlet 130 is positioned at a first end of compressor inlet housing 118. Inlet duct 132 extends from inlet 130 through compressor inlet housing 118 to rotor 126. Compressor outlet housing 120 includes outlet duct 134 and outlet 136. Outlet duct 134 extends through compressor outlet housing 120 from rotor 126 to outlet 136.

Variable diffuser 116 includes backing plate 140, inboard plate 142, diffuser vanes 144, drive ring 146, drive ring bearing 148, pinion 150, backup ring 152, and variable diffuser actuator 154. Backing plate 140 abuts compressor outlet housing 120 on a first side and inboard plate 142 on a second side. Inboard plate 142 abuts backing plate 140 on a first side and diffuser vanes 144 on a second side. Diffuser vanes 144 abut inboard plate 142 on a first side and rotor shroud 128 on a second side. Diffuser vanes 144 are configured to direct the compressed air from rotor 126 into outlet duct 134. Drive ring 146 is positioned radially outward from rotor shroud 128, and drive ring bearing 148 is positioned between driver ring 146 and rotor shroud 128. Drive ring 146 abuts rotor shroud 128 on a first side and backup ring 150 on a second side. Backup ring 150 is positioned radially outward of rotor shroud 128. Pinion 152 is connected to variable diffuser actuator 154 and is coupled to drive ring 146. Pinion 152 permits control of variable diffuser 116. Drive ring 146 is coupled to diffuser vanes 144 with pins, and as drive ring 146 is rotated it will drag diffuser vanes 144 and cause them to rotate.

Motor section 114 includes motor housing 122, motor rotor 160, and motor stator 162. Motor housing 122 surrounds motor rotor 160 and motor stator 162. Motor rotor 160 is disposed within motor stator 162 and is configured to rotate about axis A. Motor rotor 160 is mounted to tie rod 116 to drive rotation of tie rod 116.

Motor rotor 160 of motor section 114 drives rotation of shafts in turbomachine 110, which in turn rotate rotor 126. The rotation of rotor 126 draws air into inlet 130 of compressor inlet housing 118. The air flows through inlet duct 132 to rotor 126 and will be compressed by rotor 126. The compressed air is then routed through variable diffuser 116 and into outlet duct 134 of compressor outlet housing 120. The air then exits turbomachine 110 through outlet 136 of compressor outlet housing 120 and can be routed to another component of an environmental control system, such as an air cycle machine.

Turbomachine 110 further includes first journal bearing 170, first rotating shaft 172, second journal bearing 174, and second rotating shaft 176. First journal bearing 170 is positioned in compressor section 112 and is supported by compressor outlet housing 120. First rotating shaft 172 extends between and rotates with rotor 126 and motor rotor 160. Motor rotor 160 drives rotation of rotor 126 with first rotating shaft 172. A radially outer surface of first rotating shaft 172 abuts a radially inner surface of first journal bearing 170. Second journal bearing 174 is positioned in motor section 114 and is supported by motor housing 122. Second rotating shaft 176 extends from and rotates with motor rotor 160. A radially outer surface of second rotating shaft 176 abuts a radially inner surface of second journal bearing 174.

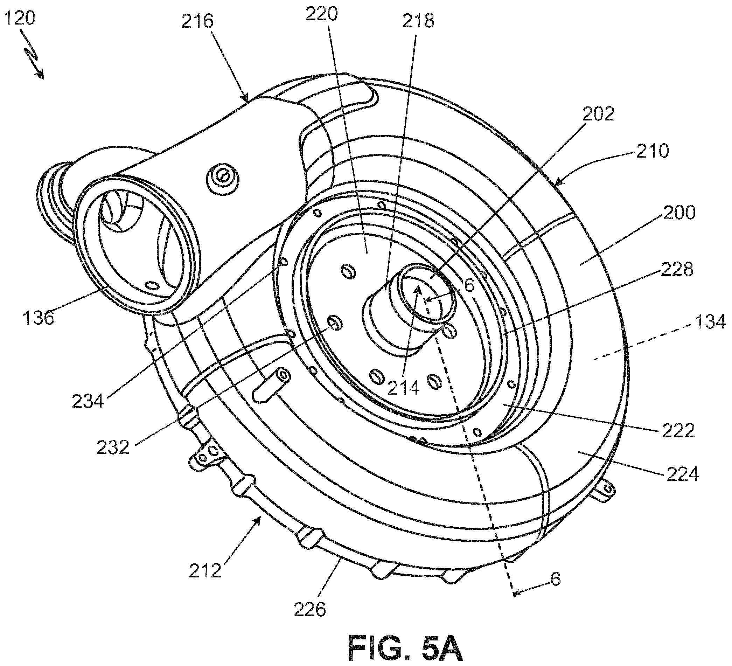

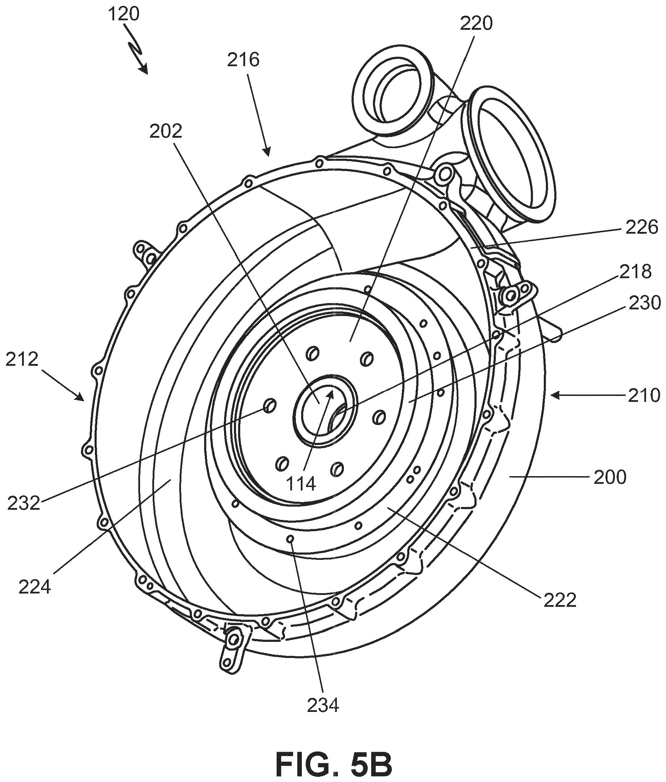

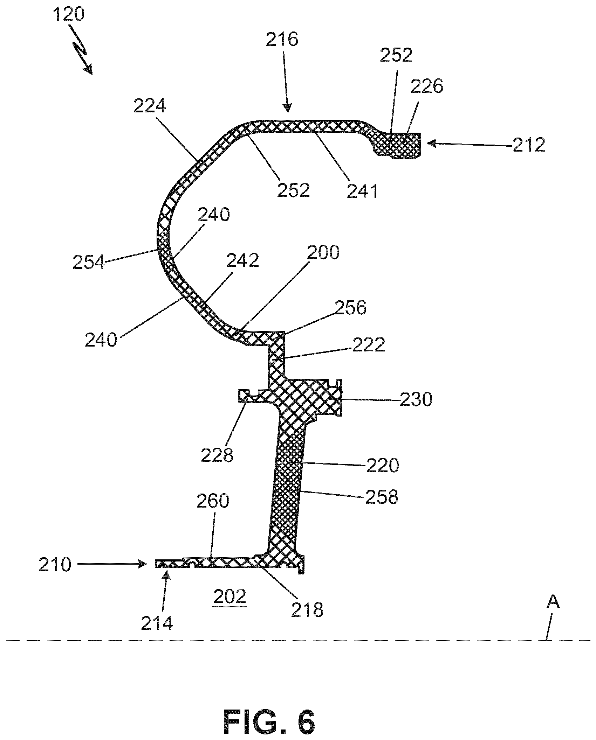

FIG. 5A is a perspective view of a first side of compressor outlet housing 120 of turbomachine 110. FIG. 5B is a perspective view of a second, opposite side of compressor outlet housing 120 of turbomachine 110. FIG. 6 is a cross-sectional view of compressor outlet housing 120 taken along section line 6-6 of FIG. 5A. FIGS. 5A, 5B, and 6 are discussed together. Compressor outlet housing 120 includes outlet duct 134, outlet 136 (shown in FIGS. 5A and 5B), body 200, and bore 202. Body 200 includes first side 210, second side 212, radially inner end 214, radially outer end 216, support sleeve 218, first disk portion 220, second disk portion 222, volute portion 224, first flange 226, second flange 228 (shown in FIGS. 5A and 6), third flange 230 (shown in FIGS. 5B and 6), first plurality of holes 232 (shown in FIGS. 5A-5B), and second plurality of holes 234 (shown in FIGS. 5A-5B). As shown in FIG. 6, body 200 further includes exterior surface 240, metal plating 241, and fiber-reinforced plastic structure 242, which can include first region 250, second region 252, third region 254, fourth region 256, fifth region 258, and sixth region 260.

Compressor outlet housing 120 includes outlet duct 134 extending through compressor outlet housing 120 to outlet 136. Compressor outlet housing 120 includes body 200 with bore 202 extending through a center of body 200. Body 200 has first side 210 and second side 212 opposite of first side 210. Body 200 also has radially inner end 214 and radially outer end 216 opposite of radially inner end 214. Radially inner end 214 of body 200 defines bore 202 extending through body 200 of rotor shroud 128.

Body 200 includes support sleeve 218 that extends axially along radially inner end 214 of body 200. Bore 202 is defined by an inner surface of support sleeve 218. First disk portion 220 is connected to a second side of support sleeve 218 and extends radially outward from support sleeve 218. Second disk portion 222 is connected to a first side of first disk portion 220 and extends radially outward from first disk portion 220. Volute portion 224 is a curved portion of body 200 that extends radially outward from second disk portion 222. Volute portion 224 curves towards first side 210 of body 200 and extends towards second side 212 of body 200 along radially outer end 216 of body 200. Volute portion 224 defines outlet duct 134 extending through compressor outlet housing 120.

First flange 226 extends axially outward from a second side of volute portion 224 at radially outer end 216 of body 200. Second flange 228 extends axially outward from a first side of first disk portion 220 at a radially outer end of first disk portion 220. Second flange 228 includes a groove that is configured to receive an O-ring to seal against other components of turbomachine 110. Third flange 230 extends axially outward from a second side of first disk portion 220 at a radially outer end of first disk portion 220. Third flange 230 includes a groove that is configured to receive an O-ring to seal against other components of turbomachine 110. First plurality of holes 232 are positioned around first disk portion 220. Second plurality of holes 234 are positioned around second disk portion 1222. Second plurality of holes 234 are configured to receive bolts to mount compressor outlet housing 120 to other components of turbomachine 110.

Compressor outlet housing 120 is a metal-plated plastic component formed according to the present disclosure and including a fiber-reinforced matrix (also referred to as "fiber-reinforced plastic structure 242") as disclosed in FIGS. 1 and 2 and variations thereof. Body 200 further includes exterior surface 240 that surrounds fiber-reinforced plastic structure 242. Metal plating 241 can be provided on all or portions of outer surface 240. A density of fibers embedded within the matrix material of the substrate of fiber-reinforced plastic structure 242 can vary throughout the substrate. Fiber-reinforced plastic structure 242 can include regions of varying fiber density, including first region 250, second region 252, third region 254, fourth region 256, fifth region 258, and sixth region 260. Fiber-reinforced plastic structure 242 may vary gradually or abruptly between regions. Fiber material and arrangement (e.g., orientation and density) can be selected as previously described to control the bulk CTE of fiber-reinforced plastic structure 242 and, particularly a CTE of fiber-reinforced plastic structure 242 in locations of compressor outlet housing 120 adjacent to locations where metal plating 241 is provided to improve a bond between fiber-reinforced plastic structure 242 and metal plating 241. Additionally, fiber density can be increased in regions subject to deflection or increased stress during operation of turbomachine 110 to aid in deflection management, stress reduction, and energy absorption. The disclosed regions of varying fiber density are illustrated by lines of varying orientation and spacing. Regions having more closely spaced lines represent regions of higher density. The lines do not indicate an orientation or arrangement of fibers. The disclosed regions of varying density are approximate locations. It will be understood by one of ordinary skill in the art that the density of fibers in any region of compressor outlet housing 120 can be based on operating conditions of compressor outlet 120 in its environment.

Metal plating 241 can be disposed on one or more portions of compressor outlet housing 120 outer surface 240. Metal plating 241 can provide added strength. improved abrasion resistance, and fluid flow though compressor outlet housing 120. In some embodiments, application of metal plating 241 can be limited to localized regions as needed to optimize operation of compressor outlet housing 120 and reduce the overall weight of compressor outlet housing 120. A thickness of metal plating 241 can vary based on operational requirements of compressor outlet housing 120.

First region 250 is a region of fiber-reinforced plastic structure 242 in first flange 226 of compressor outlet housing 120. Second region 252 is a region of fiber-reinforced plastic structure 242 in a radially outer region of volute portion 224. Third region 254 is a region of fiber-reinforced plastic structure 242 in a region of volute portion 224 that curves outwards towards first side 210 of body 200 of compressor outlet housing 120. Fourth region 256 is a region of fiber-reinforced plastic structure 242 extending through a radially inner region of volute portion 224, second disk portion 222, second flange 228, third flange 230, and a radially outer end of first disk portion 220. Fifth region 258 is a region of fiber-reinforced plastic structure 242 extending through a center of first disk portion 220. Sixth region 260 is a region of fiber-reinforced plastic structure 242 extending through a radially inner end of first disk portion 220 and support sleeve 218.

In the embodiment shown in FIG. 6, first region 250, third region 254, and fifth region 258 have a greater density than second region 252, fourth region 256, and sixth region 260. Compressor outlet housing 120 is additively manufactured as previously described herein, allowing fiber-reinforced plastic structure 242 to be manufactured with different densities in different areas of compressor outlet housing 120.

Traditional housings for rotary machines have solid cross-sections and are manufactured by casting, weldment, and/or subtractive manufacturing processes, such as hogout. Use of fiber-reinforced structure 142 in compressor outlet housing 120 allows compressor outlet housing 120 to have a reduced weight compared to traditional housings while having a equivalent strength as traditional housings due to the increased strength of fiber-reinforced plastic structure 242.

Further, the density of fiber-reinforced plastic structure 242 can varied to optimize mechanical properties of compressor outlet housing 120 locally and generally. Mechanical properties of compressor outlet housing 120, such as stress, strain, stiffness, and energy absorption, can be optimized to improve the performance of compressor outlet housing 120 by reducing stress in high stress regions of compressor outlet housing 120, reducing strain and increasing stiffness in deflection regions of compressor outlet housing 120, and increasing energy absorption capacity at energy containment regions of compressor outlet housing 120. Reducing stress and strain in local regions of compressor outlet housing 120 can also reduce stress and strain in compressor outlet housing 120 generally. Reducing the stresses in high stress regions can reduce the failure rate of components in turbomachine 110. Reduced failure rates result in reduced down time, reduced repairs, and reduced costs. Reducing the strain and increasing the stiffness in deflection regions can reduce the tolerances between rotor 126 and surrounding components, can reduce the bearing loads in turbomachine 110, and can increase the bearing alignment in turbomachine 110. Reducing the tolerances between rotor 126 and surrounding components can increase the compression efficiency of turbomachine 110. Reducing the bearing loads in turbomachine 110 can increase reliability of turbomachine 110. Increased energy absorption capacity can improve the safe operation of turbomachine 110. Should rotor 126 fail, rotor shroud 128, compressor outlet housing 120, and other components in turbomachine 110 can contain this energy to protect other components of turbomachine 110.

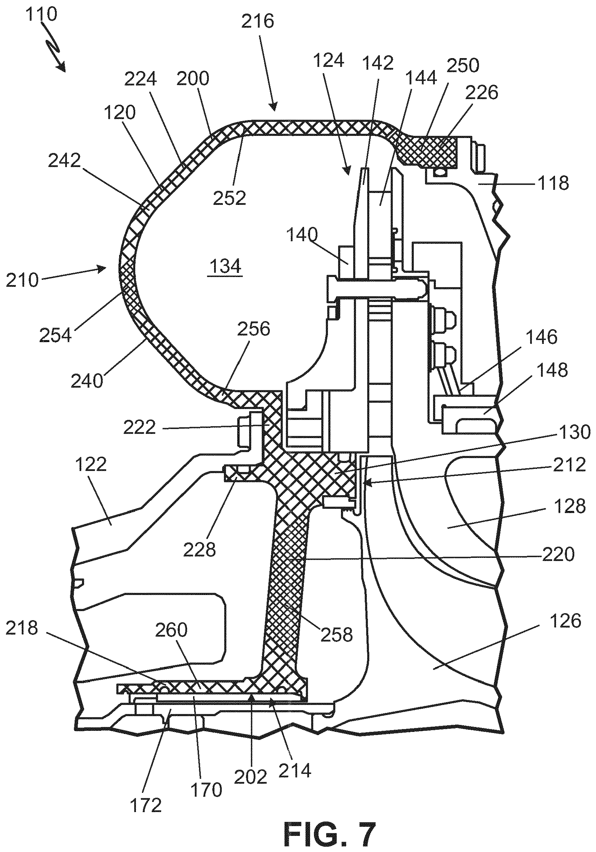

FIG. 7 is a cross-sectional view of compressor outlet housing 120 in turbomachine 110. FIG. 5 shows compressor inlet housing 118, compressor outlet housing 120, motor housing 122, variable diffuser 124, rotor 126, and rotor shroud 128. Compressor outlet housing 120 includes outlet duct 134. Variable diffuser 116 includes backing plate 140, inboard plate 142, diffuser vanes 144, drive ring 146, and drive ring bearing 148. Turbomachine 110 further includes first journal bearing 170 and first rotating shaft 172. Compressor outlet housing 120 includes body 200 and bore 202. Body 200 includes first side 210, second side 212, radially inner end 214, radially outer end 216, support sleeve 218, first disk portion 220, second disk portion 222, volute portion 224, first flange 226, second flange 228, and third flange 230. As shown in FIG. 6, body 200 further includes exterior surface 240, metal plating 241, and fiber-reinforced plastic structure 242, which can include first region 250, second region 252, third region 254, fourth region 256, fifth region 258, and sixth region 260.

Turbomachine 110 has the structure and design as described above in reference to FIG. 4. Compressor outlet housing 120 has the structure and design as described above in reference to FIGS. 5A and 5B. Compressor outlet housing 120 houses components of turbomachine 110. First flange 226 of compressor outlet housing 120 abuts and is bolted to compressor inlet housing 118. Second flange 228 of compressor outlet housing 120 abuts and seal against motor housing 122. Second flange 228 also has a groove to receive an O-ring that is positioned against and sealed against motor housing 122. Motor housing 122 is bolted to compressor outlet housing 120 through second plurality of holes 234 (not shown in FIG. 7) on second disk portion 222. Third flange 230 of compressor outlet housing 120 abuts and seals against inboard plate 142 on a radially outer end of third flange 230. Third flange 230 has a groove on the radially outer end to receive an O-ring that is positioned against and sealed against inboard plate 142. Third flange 230 also abuts and seals against rotor 126 on a radially inner end of third flange 230. A seal is positioned between the radially inner end of third flange 230 and rotor 126. First disk portion 220 of compressor outlet housing 120 is positioned adjacent to a first side of rotor 126. Support sleeve 218 abuts first journal bearing 170.

As shown in FIG. 7, compressor outlet housing 120 has first region 250 of fiber-reinforced plastic structure 242 in first flange 226. First region 250 is a deflection region of compressor outlet housing 120, which is a region of compressor outlet housing 120 that is subject to deflection. As turbomachine 110 operates, first region 250 of first flange 226 is subject to deflection. First region 250 of fiber-reinforced plastic structure 242 can be an area of increased density that aids in deflection management of compressor outlet housing 120 to reduce and prevent deflection of compressor outlet housing 120. By reducing and preventing deflection of compressor outlet housing 120, the efficiency of turbomachine 110 can be increased.

There is a gap between a hub of rotor 126 and third flange 232 of compressor outlet housing 120 and between rotor 126 and other components of turbomachine 110 to prevent contact between rotor 126 and compressor outlet housing 120 and other components of turbomachine 110. Contact between rotor 126 and compressor outlet housing 120 and other components of turbomachine 110 may damage the components and cause failure of turbomachine 110. The gaps between rotor 126 and compressor outlet housing 120 and other components of turbomachine 110 have to account for deflections that rotor 126 and compressor outlet housing 120 can be subjected to during operation of rotor 126. Thus, the more deformation that rotor 126 and compressor outlet housing 120 are subjected to during operation of rotor 126, the larger the gaps need to be to ensure component safety. However, air can leak from turbomachine 110 through the gaps, which leads to inefficiencies in turbomachine 110. Thus, it is desirable to minimize the gaps between rotor 126 and compressor outlet housing 120 and other components of turbomachine 110. Identifying deflection regions of compressor outlet housing 120 and increasing the density of fiber-reinforced plastic structure 242 in the deflection regions (for example, first region 250) reduces and prevents the deflections and strain that compressor outlet housing 120 is subjected to during operation of rotor 126 by increasing the stiffness in these areas. This reduced deflection and strain and increased stiffness means that the parts deform less when in operation. If compressor outlet housing 120 undergoes less deflection, the gaps between rotor 126 and compressor outlet housing 120 and other components of turbomachine 110 can be reduced. Reducing the gap increases the efficiency of turbomachine 110.

As shown in FIG. 7, compressor outlet housing 120 has third region 254 of fiber-reinforced plastic structure 242 in a region of volute portion 224 that curves outwards towards a first side of volute portion 224. Third region 254 is a stress region of compressor outlet housing 120, which is a region of compressor outlet housing 120 that is subject to high stress during operation of turbomachine 110. The high stress in stress regions of compressor outlet housing 120, such as third region 254, is a higher stress than stresses present in other regions of compressor outlet housing 120. Third region 254 of fiber-reinforced plastic structure 242 is an area of increased density that aids in stress reduction during operation of turbomachine 110 to reduce the stress in third region 254 of compressor outlet housing 120. Stress reduction at critical points of compressor outlet housing 120 leads to increased longevity of compressor outlet housing 120.

Reducing stress in stress regions of compressor outlet housing 120 will improve the longevity of compressor outlet housing 120. Reducing the stresses at stress regions can reduce the failure rate of compressor outlet housing 120, as well as the failure rate of turbomachine 110 overall. During operation, these failures can damage components surrounding compressor outlet housing 120, as these components are required to contain the energy of the failure for safety of the aircraft and its passengers. Reduced failure rates result in reduced down time, reduced repairs, and reduced costs.

As shown in FIG. 7, compressor outlet housing 120 has fifth region 258 of fiber-reinforced plastic structure 242 in a center of first disk portion 220. Fifth region 258 is an energy containment region of compressor outlet housing 120, which is a region of compressor outlet housing 120 that is designed to absorb energy. Fifth region 258 of first disk portion 220 is positioned adjacent to a first side of rotor 126 and needs to be designed to absorb energy from rotor 126 in the event of a failure of rotor 126. Fifth region 258 of fiber-reinforced plastic structure 242 is an area of increased density that aids in energy containment during operation of turbomachine 110. Energy containment at critical points of compressor outlet housing 120 ensures safe operation of turbomachine 110.

Increased energy containment is important to the safe operation of turbomachine 110. If rotor 126 fails, compressor outlet housing 120 is designed to absorb the energy to protect and prevent serious damage to other components of turbomachine 110. Fifth region 258 of fiber-reinforced plastic structure 242 is positioned near rotor 126 to contain the energy from rotor 126 in compressor outlet housing 120.

Compressor outlet housing 120 is one example of a housing in which variable fiber-reinforced plastic structure 242 can be used. In alternate embodiments, fiber-reinforced plastic structure 242 can be used in any suitable housing, for example a compressor inlet housing or a turbine housing, having any design. Further, cabin air compressor 110 is one example of a turbomachinery or rotary machine in which compressor outlet housing 120 or any other housing with variable fiber-reinforced plastic structure 242 can be used. In alternate embodiments, compressor outlet housing 120 or any other housing with variable fiber-reinforced plastic structure 242 can be used in an air cycle machine or any other rotary machine.

The disclosed metal-plated plastic housing components with controlled thermal expansion behavior have an increased durability in environments of varying temperature or temperature gradients. Additional benefits of the disclosed metal-plated components include reduced weight, reduced costs, and faster design, manufacturing, and testing time. Additionally, plastic parts are not prone to static electric charging.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A housing for a turbomachine, the housing comprising:
a support sleeve (218) extending along a central axis of the turbomachine; and
a volute portion (224) defining a duct in the housing, the support sleeve (218) and the volute portion (224) together comprising:
a plastic substrate, **characterized in**:
the plastic substrate comprising
a matrix material; and
fibers embedded in the matrix material, the fibers having a first coefficient of thermal expansion; and
a metal plating (24, 44) disposed on at least a portion of an outer surface of the plastic substrate, the metal plating (24, 44) having a second coefficient of thermal expansion,
wherein a bulk coefficient of thermal expansion of the plastic substrate at the outer surface of the plastic substrate substantially matches the second coefficient of thermal expansion of the metal plating (24, 44).

2. The housing of claim 1, wherein the matrix material has third coefficient of thermal expansion, the third coefficient of thermal expansion greater than the first coefficient of thermal expansion of the fibers.

3. The housing of claim 2, wherein the first coefficient of thermal expansion of the fibers is less than the second coefficient of thermal expansion of the metal plating (24, 44).

4. The housing of any preceding claim, wherein the fibers are selected from the group consisting of carbon, para-aramid, glass, metal, and combinations thereof, and optionally wherein the metal plating (24, 44) and the fibers are the same material.

5. The housing of any preceding claim, wherein a fiber density of the fibers embedded in the matrix material varies within the plastic substrate.

6. The housing of claim 5, wherein the plastic substrate comprises:
a first region having a reduced fiber density; and
one or more second regions having an increased fiber density;
wherein the one or more second regions is a deflection region, a stress region, or an energy containment region of the housing, the deflection region subject to deflections during operation of the turbomachine, the stress region adapted to withstand higher stress than other regions of the housing during operation of the turbomachine, and the energy containment region configured to contain energy.

7. The housing of claim 6, wherein the stress region is a region of the volute portion (224) that curves outwards toward a first side of the housing, or wherein the deflection region is a flange of the housing, or further comprising:
a first disk portion extending radially outward from the support sleeve (218), wherein the energy containment region is a region of the first disk portion.

8. The housing of claim 5, wherein the plastic substrate comprises an outer region disposed adjacent to the metal coating, the outer region having an increased fiber density.

9. The housing of claim 8, wherein fibers of the outer region protrude through the outer surface of the plastic substrate, or wherein fibers of the outer region are angled with respect to the outer surface of the plastic substrate.

10. A method of forming the housing of claim 1 for a turbomachine, the method comprising:
forming, by an additive manufacturing process, a plastic substrate having an outer surface;
impregnating, by the additive manufacturing process, the plastic substrate with fibers having a first coefficient of thermal expansion; and
applying a metal plating (24, 44) to at least a portion of the outer surface of the plastic substrate, the metal plating (24, 44) having a second coefficient of thermal expansion;
wherein a bulk coefficient of thermal expansion of the plastic substrate at the outer surface of the plastic substrate substantially matches the second coefficient of thermal expansion of the metal plating (24, 44);
wherein the plastic substrate and metal plating (24, 44) together form the housing having a support sleeve (218) extending along a central axis of the turbomachine and a volute portion (224) defining a duct in the housing.

11. The method of claim 10, wherein the additive manufacturing process is 3D printing.

12. The method of claim 10 or 11, wherein the step of impregnating comprises selectively printing the fibers to vary a fiber density in the plastic substrate.

13. The method of claim 10, 11 or 12, wherein the step of impregnating comprises at least one of:
selectively printing fibers to form a region of increased fiber density adjacent to the portion of the outer surface of the plastic substrate to which the metal plating (24, 44) is applied; and
selectively printing fiber at an angle relative to the portion of the outer surface to which the metal plating (24, 44) is applied.

14. The method of any of claims 10 to 13, wherein the plastic of the plastic substrate has third coefficient of thermal expansion, the third coefficient of thermal expansion greater than the first coefficient of thermal expansion of the fibers.

15. The method of 14, wherein the first coefficient of thermal expansion of the fibers is less than the second coefficient of thermal expansion of the metal plating (24, 44), and optionally wherein the fibers are selected from the group consisting of carbon, para-aramid, glass, metal, and combinations thereof.

## Patentansprüche

1. Gehäuse für eine Turbomaschine, das Gehäuse umfassend:
eine Stützhülse (218), die sich entlang einer zentralen Achse der Turbomaschine erstreckt; und
einen Volutenabschnitt (224), der einen Kanal in dem Gehäuse definiert, die Stützhülse (218) und der Volutenabschnitt (224) zusammen umfassend:
ein Kunststoffsubstrat, **gekennzeichnet durch**:
das Kunststoffsubstrat, umfassend ein Matrixmaterial; und
Fasern, die in das Matrixmaterial eingebettet sind, wobei die Fasern einen ersten Wärmeausdehnungskoeffizienten aufweisen; und
eine Metallbeschichtung (24, 44), die auf mindestens einem Abschnitt einer äußeren Oberfläche des Kunststoffsubstrats angeordnet ist, wobei die Metallbeschichtung (24, 44) einen zweiten Wärmeausdehnungskoeffizienten aufweist,
wobei ein Wärmeausdehnungskoeffizient des Kunststoffsubstrats an der äußeren Oberfläche des Kunststoffsubstrats im Wesentlichen mit dem zweiten Wärmeausdehnungskoeffizienten der Metallbeschichtung (24, 44) übereinstimmt.

2. Gehäuse nach Anspruch 1, wobei das Matrixmaterial einen dritten Wärmeausdehnungskoeffizienten aufweist, wobei der dritte Wärmeausdehnungskoeffizient größer ist als der erste Wärmeausdehnungskoeffizient der Fasern.

3. Gehäuse nach Anspruch 2, wobei der erste Wärmeausdehnungskoeffizient der Fasern kleiner ist als der zweite Wärmeausdehnungskoeffizient der Metallbeschichtung (24, 44).

4. Gehäuse nach einem der vorstehenden Ansprüche, wobei die Fasern aus der Gruppe ausgewählt sind, bestehend aus Kohlenstoff, Para-Aramid, Glas, Metall und Kombinationen davon, und optional, wobei die Metallbeschichtung (24, 44) und die Fasern das gleiche Material sind.

5. Gehäuse nach einem der vorstehenden Ansprüche, wobei die Faserdichte der in das Matrixmaterial eingebetteten Fasern innerhalb des Kunststoffsubstrats variiert.

6. Gehäuse nach Anspruch 5, wobei das Kunststoffsubstrat Folgendes umfasst:
eine erste Region, die eine reduzierte Faserdichte aufweist; und
eine oder mehrere zweite Regionen, die eine erhöhte Faserdichte aufweisen;
wobei es sich bei dem einen oder den mehreren zweiten Regionen um eine Ablenkungsregion, eine Belastungsregion oder eine Energieeindämmungsregion des Gehäuses handelt, wobei die Ablenkungsregion während des Betriebs der Turbomaschine Ablenkungen unterliegt, die Belastungsregion geeignet ist, während des Betriebs der Turbomaschine höheren Belastungen als andere Regionen des Gehäuses standzuhalten, und die Energieeindämmungsregion konfiguriert ist, um Energie aufzunehmen.

7. Gehäuse nach Anspruch 6, wobei die Belastungsregion eine Region des Volutenabschnitts (224) ist, die sich nach außen zu einer ersten Seite des Gehäuses hin krümmt, oder wobei die Ablenkungsregion ein Flansch des Gehäuses ist, oder ferner umfassend:
einen ersten Scheibenabschnitt, der sich von der Stützhülse (218) radial nach außen erstreckt, wobei die Energieeindämmungsregion eine Region des ersten Scheibenabschnitts ist.

8. Gehäuse nach Anspruch 5, wobei das Kunststoffsubstrat eine äußere Region umfasst, die an die Metallbeschichtung angrenzt, wobei die äußere Region eine erhöhte Faserdichte aufweist.

9. Gehäuse nach Anspruch 8, wobei die Fasern der äußeren Region durch die äußere Oberfläche des Kunststoffsubstrats hindurchragen, oder wobei die Fasern der äußeren Region in Bezug auf die äußere Oberfläche des Kunststoffsubstrats abgewinkelt sind.

10. Verfahren zum Bilden des Gehäuses nach Anspruch 1 für eine Turbomaschine, das Verfahren umfassend:
Bilden eines Kunststoffsubstrats, das eine äußere Oberfläche aufweist, durch einen additiven Herstellungsprozess;
Imprägnieren des Kunststoffsubstrats mit Fasern, die einen ersten Wärmeausdehnungskoeffizienten aufweisen, durch den additiven Herstellungsprozess; und
Aufbringen einer Metallbeschichtung (24, 44) auf mindestens einen Abschnitt der äußeren Oberfläche des Kunststoffsubstrats, wobei die Metallbeschichtung (24, 44) einen zweiten Wärmeausdehnungskoeffizienten aufweist;
wobei ein Wärmeausdehnungskoeffizient des Kunststoffsubstrats an der äußeren Oberfläche des Kunststoffsubstrats im Wesentlichen mit dem zweiten Wärmeausdehnungskoeffizienten der Metallbeschichtung (24, 44) übereinstimmt;
wobei das Kunststoffsubstrat und die Metallbeschichtung (24, 44) zusammen das Gehäuse bilden, das eine Stützhülse (218), die sich entlang einer Mittelachse der Turbomaschine erstreckt, und einen Volutenabschnitt (224) aufweist, der einen Kanal in dem Gehäuse definiert.

11. Verfahren nach Anspruch 10, wobei es sich bei dem generativen Herstellungsprozess um 3D-Drucken handelt.

12. Verfahren nach Anspruch 10 oder 11, wobei der Schritt des Imprägnierens das selektive Bedrucken der Fasern umfasst, um die Faserdichte in dem Kunststoffsubstrat zu verändern.

13. Verfahren nach Anspruch 10, 11 oder 12, wobei der Schritt des Imprägnierens mindestens eines von Folgendem umfasst:
selektives Bedrucken von Fasern zur Bildung einer Region mit erhöhter Faserdichte angrenzend an den Abschnitt der äußeren Oberfläche des Kunststoffsubstrats, auf den die Metallbeschichtung (24, 44) aufgebracht wird; und
selektives Bedrucken von Fasern in einem Winkel relativ zu dem Abschnitt der äußeren Oberfläche, auf den die Metallbeschichtung (24, 44) aufgebracht wird.

14. Verfahren nach einem der Ansprüche 10 bis 13, wobei der Kunststoff des Kunststoffsubstrats einen dritten Wärmeausdehnungskoeffizienten aufweist, wobei der dritte Wärmeausdehnungskoeffizient größer ist als der erste Wärmeausdehnungskoeffizient der Fasern.

15. Verfahren nach 14, wobei der erste Wärmeausdehnungskoeffizient der Fasern kleiner ist als der zweite Wärmeausdehnungskoeffizient der Metallbeschichtung (24, 44), und wobei die Fasern optional aus der Gruppe, bestehend aus Kohlenstoff, Para-Aramid, Glas, Metall und Kombinationen davon, ausgewählt sind.

## Revendications

1. Carter pour une turbomachine, le carter comprenant :
un manchon de support (218) s'étendant le long d'un axe central de la turbomachine ; et
une partie de volute (224) définissant un conduit dans le carter, le manchon de support (218) et la partie de volute (224) comprenant ensemble :
un substrat en plastique, **caractérisé par** :
le substrat en plastique comprenant un matériau de matrice ; et
des fibres intégrées dans le matériau de matrice, les fibres présentant un premier coefficient de dilatation thermique ; et
un placage métallique (24, 44) disposé sur au moins une partie d'une surface externe du substrat en plastique, le placage métallique (24, 44) présentant un deuxième coefficient de dilatation thermique,
dans lequel un coefficient de dilatation thermique en volume du substrat en plastique au niveau de la surface externe du substrat en plastique correspond sensiblement au deuxième coefficient de dilatation thermique du placage métallique (24, 44).

2. Carter selon la revendication 1, dans lequel le matériau de matrice présente un troisième coefficient de dilatation thermique, le troisième coefficient de dilatation thermique étant supérieur au premier coefficient de dilatation thermique des fibres.

3. Carter selon la revendication 2, dans lequel le premier coefficient de dilatation thermique des fibres est inférieur au deuxième coefficient de dilatation thermique du placage métallique (24, 44).

4. Carter selon l'une quelconque revendication précédente, dans lequel les fibres sont sélectionnés dans le groupe constitué de carbone, de para-aramide, de verre, de métal, et de combinaisons de ceux-ci, et optionnellement, dans lequel le placage métallique (24, 44) et les fibres sont le même matériau.

5. Carter selon l'une quelconque revendication précédente, dans lequel une densité de fibres des fibres intégrées dans le matériau de matrice varie à l'intérieur du substrat en plastique.

6. Carter selon la revendication 5, dans lequel le substrat en plastique comprend :
une première région présentant une densité de fibres réduite ; et
une ou plusieurs secondes régions présentant une densité de fibres accrue ;
dans lequel la ou les secondes régions sont une région de déflexion, une région de contrainte ou une région de confinement d'énergie du carter, la région de déflexion étant soumise à des déflexions pendant le fonctionnement de la turbomachine, la région de contrainte étant adaptée pour résister à une contrainte plus élevée que d'autres régions du carter pendant le fonctionnement de la turbomachine, et la région de confinement d'énergie étant conçue pour contenir une énergie.

7. Carter selon la revendication 6, dans lequel la région de contrainte est une région de la partie de volute (224) qui s'incurve vers l'extérieur vers un premier côté du carter, ou dans lequel la région de déflexion est un rebord du carter, ou comprenant en outre :
une première partie de disque s'étendant radialement vers l'extérieur à partir du manchon de support (218), dans lequel la région de confinement d'énergie est une région de la première partie de disque.

8. Carter selon la revendication 5, dans lequel le substrat en plastique comprend une région externe disposée adjacente au revêtement métallique, la région externe présentant une densité de fibres accrue.

9. Carter selon la revendication 8, dans lequel des fibres de la région externe font saillie à travers la surface externe du substrat en plastique et/ou dans lequel des fibres de la région externe sont inclinées par rapport à la surface externe du substrat en plastique.

10. Procédé de formation du carter selon la revendication 1 pour une turbomachine, le procédé comprenant :
la formation, par un procédé de fabrication additive, d'un substrat en plastique présentant une surface externe ;
l'imprégnation, par le procédé de fabrication additive, du substrat en plastique avec des fibres présentant un premier coefficient de dilatation thermique ; et
l'application d'un placage métallique (24, 44) sur au moins une partie de la surface externe du substrat en plastique, le placage métallique (24, 44) présentant un deuxième coefficient de dilatation thermique ;
dans lequel un coefficient de dilatation thermique en volume du substrat en plastique au niveau de la surface externe du substrat en plastique correspond sensiblement au deuxième coefficient de dilatation thermique du placage métallique (24, 44) ;
dans lequel le substrat en plastique et le placage métallique (24, 44) forment ensemble le carter présentant un manchon de support (218) s'étendant le long d'un axe central de la turbomachine et une partie de volute (224) définissant un conduit dans le carter.

11. Procédé selon la revendication 10, dans lequel le procédé de fabrication additive est une impression 3D.

12. Procédé selon la revendication 10 ou 11, dans lequel l'étape d'imprégnation comprend l'impression sélective des fibres afin de faire varier une densité de fibres dans le substrat en plastique.

13. Procédé selon la revendication 10, 11 ou 12, dans lequel l'étape d'imprégnation comprend au moins l'une de :
l'impression sélective de fibres afin de former une région d'une densité de fibres accrue adjacente à la partie de la surface externe du substrat en plastique sur laquelle le placage métallique (24, 44) est appliqué ; et
l'impression sélective d'une fibre selon un angle par rapport à la partie de la surface externe sur laquelle le placage métallique (24, 44) est appliqué.

14. Procédé selon l'une quelconque des revendications 10 à 13, dans lequel le plastique du substrat en plastique présente un troisième coefficient de dilatation thermique, le troisième coefficient de dilatation thermique étant supérieur au premier coefficient de dilatation thermique des fibres.

15. Procédé selon la revendication 14, dans lequel le premier coefficient de dilatation thermique des fibres est inférieur au deuxième coefficient de dilatation thermique du placage métallique (24, 44), et optionnellement, dans lequel les fibres sont sélectionnés dans le groupe constitué de carbone, de para-aramide, de verre, de métal, et de combinaisons de ceux-ci.
